# FASCICULE DE BREVET EUROPEEN

(11) **EP 2 807 008 B1**
(45) Date de publication et mention de la délivrance du brevet: **13.04.2016**
(21) Numéro de dépôt: 13704196.8
(22) Date de dépôt: 24.01.2013
(51) Int. Cl.: B29B 11/16, B29C 33/00, B29D 99/00, B29C 70/54, B29C 70/48, B29C 70/08, B29C 70/86, B29C 31/08, B64C 11/26, B29L 31/08, B23P 15/04, B64F 5/00, B64D 27/00, B29C 70/24

(54) **METHODE DE FABRICATION D'UNE PALE D'HELICE EN MATERIAU COMPOSITE**
VERFAHREN ZU HERSTELLUNG EINES PROPELLERBLATTES AUS VERBUNDKUNSTSTOFF
METHOD OF FABRICATION OF A PROPELLER BLADE IN COMPOSITE MATERIAL

(30) Priorité: 25.01.2012 FR 1250710; 25.01.2012 FR 1250705; 25.01.2012 FR 1250707; 25.01.2012 FR 1250708
(43) Date de publication de la demande: 03.12.2014
(73) Titulaire: Snecma, 75015 Paris (FR); SAFRAN, 75015 Paris (FR)
(72) Inventeur: MATHON, Richard, 77550 Moissy-Cramayel Cedex (FR); FOUSSARD, Olivier, 91450 Etiolles (FR); MARCHAL, Yann, 77550 Moissy-Cramayel Cedex (FR); VARIN, Franck, Bernard, Léon, 77550 Moissy-Cramayel Cedex (FR)
(74) Mandataire: Brevalex
(86) Numéro de dépôt international: PCT/FR2013/050145
(87) Numéro de publication internationale: WO 2013/110895

(56) Documents cités:
- EP-A1- 1 777 063
- EP-A1- 2 308 670
- WO-A1-2012/001279
- FR-A1- 2 683 764
- FR-A1- 2 940 173

## Description

Le sujet de l'invention est un procédé de fabrication d'une pale d'hélice, qui peut trouver emploi par exemple pour les hélices de soufflante de moteurs dits «open rotor», qui ne sont pas couvertes par un carter extérieur et sont donc exposées à l'atmosphère, sans que le procédé soit limité à de telle hélices.

Les pales peuvent favorablement être construites en matériaux composites, pour réduire leur poids en particulier, mais diverses exigences de résistance doivent être respectées. En particulier, elles doivent résister à la fois à des impacts accidentels de corps solides et à la transmission de chaleur originaire du reste du moteur. La première de ces contraintes concernant la surface libre des pales et la seconde leur coeur, on a eu l'idée de construire les pales en plusieurs partie, faites de matériaux différents résistant respectivement bien à ces sollicitations d'impact et d'échauffement, et assemblées ensemble en formant une structure unitaire. L'une de ces parties est une partie extérieure de la pale, et l'autre, appelée longeron, comprend un pied de pale raccordé au moteur et un coeur de pale inséré dans la partie extérieure. Le longeron résiste aux échauffements, et la partie extérieure aux impacts. Il est encore envisagé d'intercaler de la mousse entre le coeur de pale et la partie extérieure afin d'alléger encore la pale, par exemple en la collant autour d'un bord du coeur de pale.

Les documents WO 2012/001279 A, FR 2 683 764 A et FR 2 940 173 A décrivent des procédés de fabrication d'une telle aube composée d'un longeron encastré dans une préforme de pale.

Une étape essentielle est l'insertion du longeron éventuellement garni de la mousse dans une ouverture centrale d'une préforme de la partie extérieure, composée d'un tissu de fibres encore libre, c'est-à-dire dépourvu de résine à polymériser, et donc souple de manière à bien pouvoir se refermer sur le longeron. Diverses difficultés apparaissent à cette occasion : la préforme ne peut pas être trop ouverte pour laisser passer le longeron car des déformations excessives, conduisant au déplacement des fibres de la préforme, et plus tard à une dégradation de la résistance de la partie extérieure, peuvent apparaître ; la mousse collée au longeron est très fragile et peut facilement être endommagée pendant l'insertion car son épaisseur périphérique est très faible, ce qui impose donc une ouverture suffisante de la préforme malgré les risques mentionnés ; et la position du longeron avec la mousse dans la préforme doit être très précise sous peine de risquer un défaut de fermeture du moule dans lequel l'assemblage doit être posé pour injecter la résine de fabrication de la préforme, et de nouveau un défaut de fabrication.

Un procédé de fabrication adapté a été proposé. Sous une forme générale, il s'agit d'un procédé de fabrication d'une pale d'hélice, comprenant les étapes suivantes :
- formation d'un longeron comprenant un coeur de pale ;
- formation d'une préforme de pale comprenant un tissu de fibres, le tissu ayant une zone de déliaison où il est divisé en deux peaux superposées, la zone de déliaison comprenant un emplacement destiné à recevoir le coeur de pale ;
- mise en place de la préforme de pale dans un outillage comprenant une empreinte de ladite préforme ;
- ouverture de la zone de déliaison en écartant les peaux ;
- mise en place du longeron en insérant le coeur de pale dans la zone de déliaison ;
- refermeture de la zone de déliaison en rapprochant les peaux;
- injection de résine dans la préforme de pale ;
- polymérisation de la résine et usinage de la préforme de pale ;
caractérisé par :
- une étape de création de traceurs qui sont des repères à des positions déterminées de la préforme de pale, pendant la formation de ladite préforme de pale ;
- une étape de mise en forme de la préforme de pale à une position déterminée dans l'empreinte après l'étape de mise en place de la préforme de pale, en faisant coïncider les traceurs avec des positions cibles définies sur l'outillage ;
- et une étape de serrage de la préforme de pale dans l'empreinte hors de la zone de déliaison avant d'ouvrir la zone de déliaison et jusqu'à ce que le longeron soit mis en place.

Ce procédé résout en soi le problème de fabriquer une pale d'hélice formée de deux parties en matériaux différents et intimement unies l'une à l'autre, une des parties étant emmanchée dans l'autre et les deux parties pouvant être en matériau composite, avec une bonne qualité de fabrication découlant d'une position relative précise de la préforme autour du longeron, de l'absence de dommage à la préforme au cours de l'ouverture et de l'insertion du longeron, et d'absence de dommage au longeron, au cas où il est couvert de mousse. La préforme reste en effet à une position précise dans l'outillage pendant toute la durée du procédé, et surtout tandis que le longeron est installé en elle, jusqu'à l'injection et à la polymérisation de la résine.

Les brevets antérieurs cités ci-dessus ne proposent en effet pas de solutions à ces différents problèmes. Ils proposent, sans donner de détails, d'ouvrir la préforme pour y enfoncer le longeron, ou de construire la préforme en tissu de fibres à bande unique, de poser le longeron sur une des moitiés de ce tissu et de rabattre l'autre moitié sur le longeron. Ces opérations n'offrent aucune garantie quant aux difficultés possibles qu'on a indiquées. En général, elles ne sont pas indiquées comme étant faites dans l'outillage qui servira à la polymérisation, et même si c'est le cas, les Auteurs des procédés antérieurs n'en tirent aucun avantage.

L'utilisation de l'outillage de polymérisation est en revanche exploitée dans l'invention pour contribuer non seulement à stabiliser la position de la préforme de pale, mais encore pour la placer avec précision à une position déterminée et à l'y maintenir, au moyen de la coïncidence entre les traceurs établis auparavant sur la préforme de pale et des positions cibles de ces capteurs, qui sont définies sur l'outillage, ou du moins par rapport à lui, par un dispositif dont la position est réglée ou calibrée par rapport à celle de l'outillage. Il est possible de serrer la préforme sans difficulté dans l'empreinte et sans risque de la déplacer, en recourant à un autre dispositif, qui est avantageusement solidaire de l'outillage ; enfin, l'étape classique d'ouverture de la zone de déliaison peut être accomplie de façon délicate et sans risque de déplacer la préforme, tant que le serrage est maintenu, en recourant encore avantageusement à un dispositif solidaire de l'outillage. Le dispositif de serrage peut être directement implanté sur l'outillage, et le dispositif écarteur peut être simplement posé sur ledit outillage.

L'invention sera maintenant décrite à l'aide des figures suivantes, qui illustrent les diverses étapes d'un procédé de fabrication d'une pale d'hélice conforme à l'invention, mais non exclusif d'autres réalisations de celle-ci :
- la Figure 1 est une vue générale du longeron ;
- la Figure 2 est une vue générale de la préforme de pale ;
- la Figure 3 est une vue générale de l'outillage ;
- la Figure 4 est une vue expliquant l'étape de la mise en place de la préforme dans l'outillage ;
- la Figure 5 est une vue expliquant le mode de maintien en place de la préforme de pale ;
- la Figure 6 représente un des mors de serrage du patin du maintien ;
- la Figure 7 représente la mise en place d'un écarteur de la zone de déliaison de la préforme ;
- la Figure 8 représente un dispositif de levage de la plaque de l'écarteur;
- et les Figures 9, 10 et 11 illustrent l'utilisation de l'écarteur.

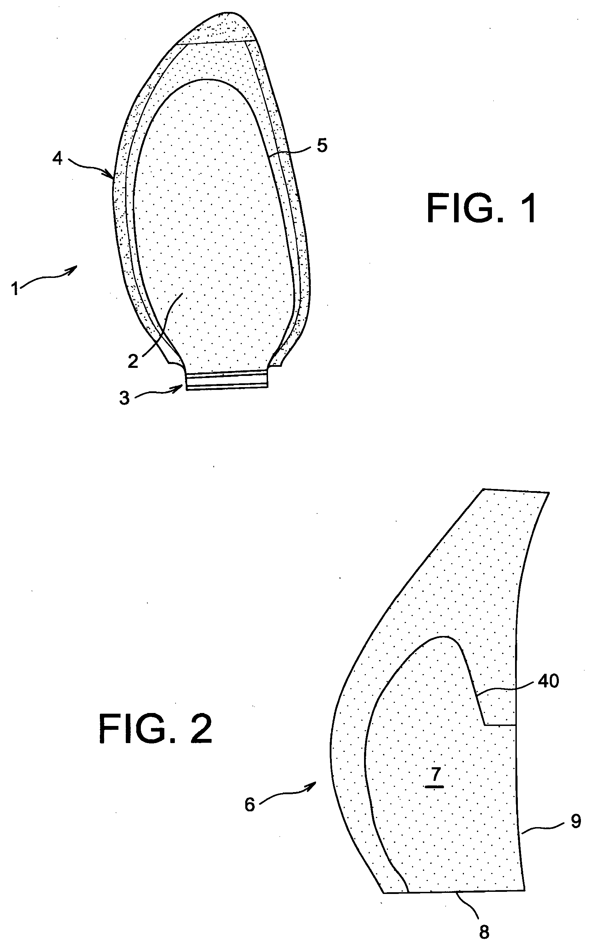

Les figures 1 et 2 seront maintenant décrites. La pale comprend un longeron 1 pouvant être réalisé à partir d'une préforme formée d'un tissu tridimensionnel en fibres de carbone, qui est ensuite imprégné de résine par un procédé d'injection, polymérisé puis usiné. Le longeron 1 comprend un coeur de pale 2 et un pied de pale 3. Après l'usinage du longeron 1, une garniture de mousse 4, préalablement obtenue par usinage dans une plaque, est collée sur le bord 5 du coeur de pale 2. La pale comprend encore une partie extérieure, comprenant notamment les surfaces extérieures, qui intervient dans la procédé de l'invention à l'état d'une préforme de pale 6 composée d'un tissu de fibres de carbone et usinée par une découpe au jet d'eau pour prendre les contours extérieurs de la pale. Ce tissu est souple et libre, n'ayant pas reçu la résine à polymériser qui complétera sa structure. Le tissage de la préforme de pale 6 est unitaire sur la plus grande partie de sa surface mais il présente toutefois une zone de déliaison 7 qui divise la préforme de la pale 6 en deux peaux superposées, situées du côté de l'intrados et de l'extrados de la pale, de manière à former une cavité de logement du coeur de pale 2 et de la garniture de mousse 4 quand la zone de déliaison 7 est ouverte ; la zone de déliaison 7 comprend une grande partie du centre de la préforme de pale 6 ainsi que des portions d'un bord intérieur 8 pour laisser dépasser le pied de pale 3 et d'un bord vertical 9 pour permettre l'écartement des peaux et l'insertion du longeron 1 de la garniture de mousse 2.

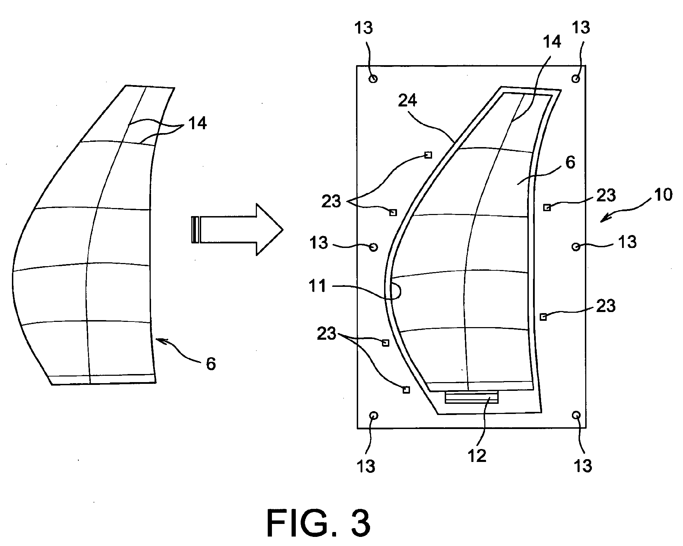

Les étapes caractéristiques du procédé de l'invention seront maintenant décrites. Une première étape de l'assemblage entre la préforme de pale 6 et le longeron 1 muni de la garniture de mousse 4 s'effectue au moyen d'un outillage 10 représenté à la figure 3. Il consiste en une moitié de moule qui comprend une empreinte 11 de forme semblable à celle de la préforme de pale 6 et dans laquelle celle-ci peut donc être installée, avec un appendice 12 de réception du pied de pale 3. Il comprend encore, autour de l'empreinte 11, un certain nombre de mires 13 ponctuelles de référence de position. Six mires 13 suffisent dans tous les cas à donner une référence complète.

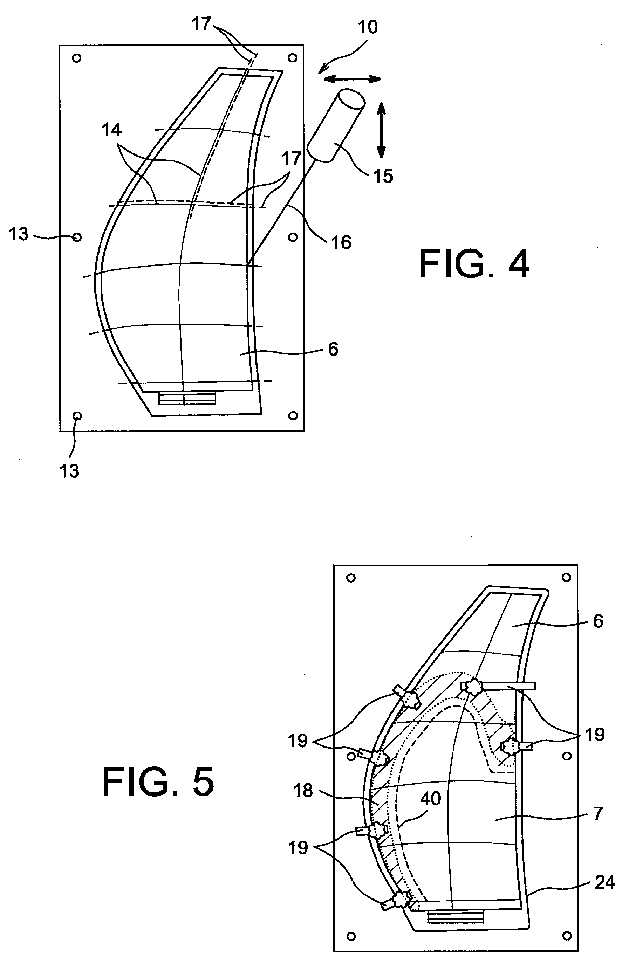

La figure 4 représente l'insertion de la préforme de pale 6 dans l'outillage 10. La préforme de pale 6 a été détrempée à l'eau déminéralisée pour la raidir quelque peu. Certaines des fibres de la préforme de pale 6 ont des traceurs 14, c'est-à-dire des fibres de repérage composées de fibres de carbone et de verre torsadées ensemble, et qui s'étendent sur des lignes entrecroisées à des positions déterminées de la préforme de pale 6. Les fibres de verre servent à rendre les traceurs 14 distincts visuellement des autres fibres, et les fibres de carbone à leur assurer une résistance suffisante.

Un laser 15 mobile dans un plan horizontal au-dessus de l'outillage 10 projette un faisceau 16 sur l'outillage 10 et la préforme de pale 6. Les mouvements du laser 15 sont programmés pour que la projection du faisceau 16 désigne des positions cibles des traceurs 14 en suivant des lignes de projection 17 coïncidant avec ces positions cibles des traceurs 14 si la préforme de pale 6 est bien installée dans l'outillage 10. Les réglages préliminaires de position du laser 15 s'effectuent en visant les mires 13. Si donc un écart apparaît entre les lignes de projection 17 et les traceurs 14, la préforme de pale 6 est déplacée manuellement dans l'empreinte 11 jusqu'à rétablir la coïncidence : la préforme de pale 6 est alors à une position parfaitement déterminée, et sans être déformée, dans l'empreinte 11.

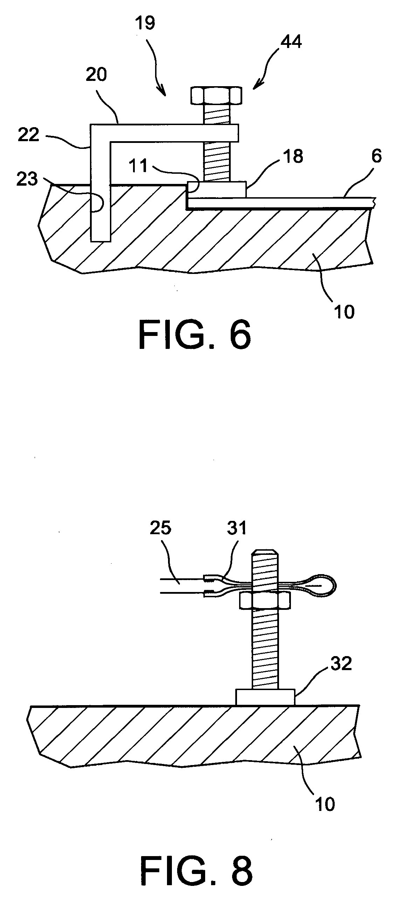

Quand cette étape est accomplie, un patin de serrage 18, représenté à la figure 5, est posé sur la préforme de pale 6 et serré. Il s'étend à peu de distance du contour 40 de la zone de déliaison 7 (à quelques centimètres) et pénètre dans l'empreinte 11. Son serrage sur la préforme de pale 6 est obtenu par des mors 19, comprenant comme on le représente à la figure 6, un bras 20 surplombant à l'outillage 10, une tige 22 soutenant le bras 20 et implantée dans un perçage 23 respectif de l'outillage 10, et une vis de pression 44 engagée sur le bras 20 et pressant le patin de serrage 18. Si le même l'outillage 10 sert ensuite à l'injection de résine pour finir de former la préforme de pale 6, les perçages 23 sont répartis à l'extérieur d'un joint d'étanchéité 24 entourant l'empreinte 11 afin d'éviter que de la résine débordant de l'empreinte 11 ne s'y écoule. Le patin de serrage 18 est une plaque unitaire plate en forme de bande courbe de largeur à peu près constante. Il est en polymère thermoformé de quelques centimètres d'épaisseur, et possède une forme concave et irrégulière de façon que son bord interne suive le contour 40 de la zone de déliaison 7, à une distance de quelques centimètres également, et que son bord externe comprenne une portion qui suive le contour de l'empreinte 11 de façon ajustée. Cette première portion longe donc un bord vertical de l'empreinte 11 qui est opposé au bord vertical 9 déjà mentionné, et le patin de serrage 18 comprend encore une seconde portion qui s'étend depuis la première portion jusqu'audit bord vertical 9, à une hauteur de l'empreinte 11 intermédiaire au bord intérieur 8 et à un bord extérieur opposé, de l'aube. La seconde portion du patin de serrage 18 fait elle-même une concavité dirigée vers le bord intérieur 8. Le laser 15 peut rester en action pendant le serrage du patin afin de vérifier que le tissu n'est pas déformé à l'excès.

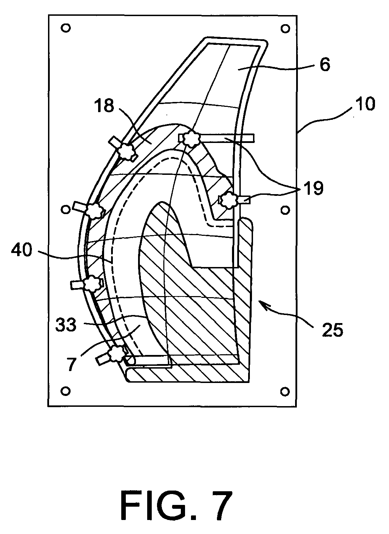

L'étape suivante du procédé consiste en un écartement de la préforme de pale 6 à la zone de déliaison 7. On utilise pour cela un écarteur, représenté d'abord à la figure 7, et qui comprend une plaque 25 glissée entre les deux peaux 26 et 27 de la préforme de pale 6. L'écarteur comprend encore des dispositifs de levage 30, représentés à la figure 8, comprenant chacun une pince 31 d'un bord 28 de la plaque 25, un support 32 posé sur l'outillage 10, et un élévateur de la pince 31 à une hauteur réglable, tel qu'un écrou mobile sur une tige filetée verticale du support 32 et qui soutient la pince 31. Il est donc facile de glisser la plaque 25 entre les peaux 26 et 27 puis de la soulever délicatement, sans risques importants d'endommager les fibres de la préforme de pale 6 ni de déformer leur tissu. La figure 7 montre que le contour 33 de la plaque 25 est distant de quelques centimètres de celui (40) de la zone de déliaison 7, afin de ménager une portion en pente douce 34 de la peau 26 soulevée par l'écarteur 25 et d'éviter ainsi des dommages au tissu de fibres de la préforme de pale 6.

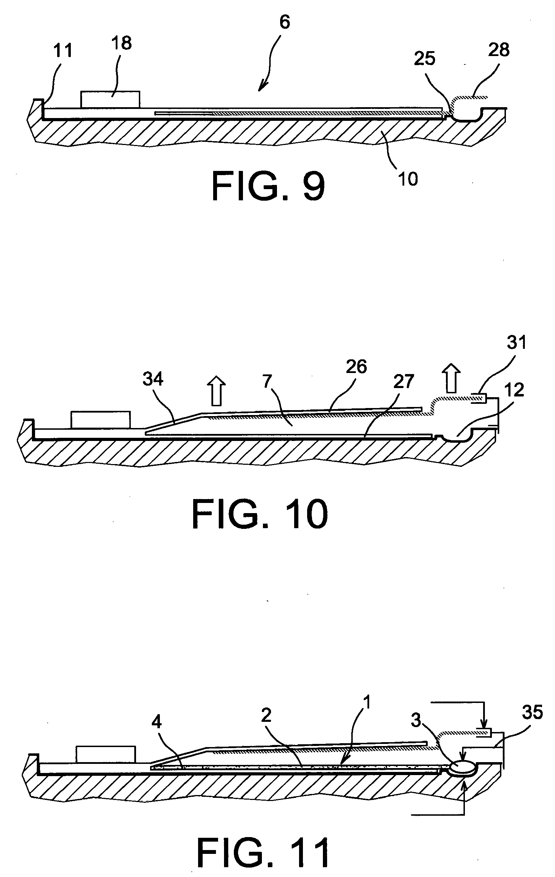

Les figures 9 et 10 représentent le dispositif en vue de côté avant et après l'écartement des peaux 26 et 27 et l'ouverture de la zone de déliaison 7.

Le longeron 1 est ensuite mis en place (figure 11), le coeur de pale 2 entrant dans la zone de déliaison 7, le pied de pale 3 entrant dans la cavité 12 et pouvant y être retenu par une bride 35 elle aussi solidaire de l'outillage 10. L'ajustement du pied de pale 3 dans l'appendice 12, combiné à celui de la préforme de pale 6 dans l'empreinte 11, assure leur ajustement de position mutuelle et donc la qualité de forme de la pale. L'écarteur et le patin de serrage 18 sont ensuite retirés, la peau 26 supérieure revenant sur le longeron 1, et une étape de vérification et éventuellement de réajustement de position de cette peau 26 supérieure peut être faite en refaisant les projections du faisceau 16 sur les traceurs 14 et les déplacements manuels des fibres.

Quand l'insertion du longeron 1 dans la préforme de pale 6 a ainsi été complétée, la préforme de pale 6 est séchée, soit en étuve, le pied de pale 3 restant bridé et la préforme de pale 6 étant couverte par une simple feuille de protection ; soit dans un sac à vide encore en étuve, et avec le pied de pale bridé ; soit enfin, ce qu'on représente à la figure 11, le séchage peut être entrepris après l'installation d'une coquille supérieure 36 qui clôt l'empreinte 11 de l'outillage 10, et il s'effectue sous presse, la bride 35 ayant alors été retirée. Quel que soit le mode de séchage, la résine de la préforme de pale 6 est ensuite injectée puis polymérisée, et la pale est usinée, ces dernières opérations étant classiques.

Les fibres de carbone peuvent être identiques pour le longeron 1 et la préforme de pale 6, de type IM7 par exemple, mais les résines sont avantageusement différentes pour permettre au longeron 1 de résister aux échauffements et à la préforme de pale 6 de résister aux impacts, ainsi qu'on l'a mentionné : la résine BMI peut être utilisée pour le longeron 1, et la résine PR520 pour la préforme de pale 6. La garniture de mousse 4 peut être réalisée en mousse Rohacell (marque déposée) 110 XTHT.

## Revendications

1. Procédé de fabrication d'une pale d'hélice, comprenant les étapes suivantes :
- formation d'un longeron (1) comprenant un coeur de pale (2) ;
- formation d'une préforme de pale (6) comprenant un tissu de fibres, le tissu ayant une zone de déliaison (7) où il est divisé en deux peaux (26, 27) superposées, la zone de déliaison comprenant un emplacement destiné à recevoir le coeur de pale ;
- mise en place de la préforme de pale dans un outillage (10) comprenant une empreinte (11) de ladite préforme ;
- ouverture de la zone de déliaison (7) en écartant les peaux (26, 27) ;
- mise en place du longeron (1) en insérant le coeur de pale (2) dans la zone de déliaison (7) ;
- refermeture de la zone de déliaison en rapprochant les peaux;
- injection de résine dans la préforme de pale ;
- polymérisation de la résine et usinage de la préforme de pale ;
**caractérisé en ce qu'**il comprend :
- une étape de création de traceurs (14) qui sont des repères à des positions déterminées de la préforme de pale (6), pendant la formation de ladite préforme de pale ;
- une étape de mise en forme de la préforme de pale (6) à une position déterminée dans l'empreinte après l'étape de mise en place de la préforme de pale, en faisant coïncider les traceurs (14) avec des positions cibles définies par rapport à l'outillage ;
- et une étape de serrage de la préforme de pale (6) dans l'empreinte hors de la zone de déliaison (7) avant d'ouvrir la zone de déliaison et jusqu'à ce que le longeron (1) soit mis en place.

2. Procédé de fabrication d'une pale d'hélice suivant la revendication 1, **caractérisé en ce que** les étapes de mise en forme de la préforme de pale (6), de serrage de la préforme de pale (6) et d'ouverture de la zone de déliaison (7) de la préforme de pale (6) sont accomplies en utilisant respectivement un dispositif de création des positions cibles ayant une position réglée par rapport à l'outillage, un dispositif implanté sur l'outillage et un dispositif posé sur l'outillage.

3. Procédé de fabrication d'une pale d'hélice selon la revendication 1 ou 2, **caractérisé en ce qu'**il comprend un collage d'une garniture de mousse (4) autour du coeur de pale pour former le longeron.

4. Procédé de fabrication d'une pale d'hélice suivant l'une quelconque des revendications 1 à 3, **caractérisé en ce que** le longeron comprend encore un pied de pale (3).

5. Procédé de fabrication d'une pale d'hélice suivant l'une quelconque des revendications 1 ou 3, **caractérisé en ce que** le longeron est formé en créant un tissu de fibres, en injectant une seconde résine dans le tissu, en polymérisant la seconde résine et en usinant le longeron, la seconde résine étant différente de la résine injectée dans la préforme de pale.

6. Procédé de fabrication d'une pale d'hélice suivant la revendication 4, **caractérisé en ce que** l'empreinte d'outillage comprend un appendice (12) de réception du pied de pale.

7. Procédé de fabrication d'une pale d'hélice suivant l'une quelconque des revendications 1 à 6, **caractérisé en ce que** les traceurs (14) sont des fibres de repérage de la préforme de pale qui ont une apparence particulière.

8. Procédé de fabrication d'une pale d'hélice selon l'une quelconque des revendications 1 à 7, **caractérisé en ce que** les positions cibles définies par rapport à l'outillage sont désignées par un laser (15) mobile devant la préforme de pale et ayant un faisceau (16) dirigé sur la préforme de pale.

9. Procédé de fabrication d'une pale d'hélice selon la revendication 8, **caractérisé en ce qu'**il comprend une étape de repérage de position de mires (13) établies sur l'outillage (10) par le laser (15), afin de calibrer la position du laser avant qu'il ne désigne les positions cibles.

10. Procédé de fabrication d'une pale d'hélice selon l'une quelconque des revendications 7 à 9, **caractérisé en ce que** la mise en place de la préforme de pale est répétée après la jonction du longeron à la préforme de pale et avant l'injection de la résine.

11. Procédé de fabrication d'une pale d'hélice suivant l'une quelconque des revendications 1 à 10, **caractérisé en ce que** l'étape de serrage est accomplie en employant un patin (18) et des moyens de serrage de la préforme de pale par le patin, le patin (18) pénétrant dans l'empreinte (11), comprenant un bord interne s'étendant à une distance en général constante d'un contour (40) de la zone de déliaison (7) et s'étendant autour dudit contour hors de ladite zone.

12. Procédé de fabrication d'une pale d'hélice suivant la revendication 11, **caractérisé en ce que** le patin (18) comporte un bord externe dont une portion suit un contour de l'empreinte (11) de façon ajustée, et le bord interne laisse dégagés des portions d'un bord vertical (9) et d'un bord intérieur (8) de la préforme, l'empreinte (11) étant munie d'un appendice (12) devant le bord intérieur (8) pour recevoir un pied de pale (3) appartenant au longeron (1).

13. Procédé de fabrication d'une pale d'hélice suivant l'une quelconque des revendications 11 ou 12, **caractérisé en ce que** les moyens de serrage comprennent des mors (19) qui comprennent des supports (22) assujettis à l'outillage (10) et des moyens de pression du patin (18) mobiles vers la pièce principale de l'outillage.

14. Procédé de fabrication d'une pale d'hélice suivant l'une quelconque des revendications 1 à 13, **caractérisé en ce que** l'étape d'ouverture de la zone de déliaison (7) est accomplie en employant un écarteur, comprenant une plaque (25) introduite dans la zone de déliaison sans s'étendre jusqu'à un contour (40) interne à la préforme de la zone de déliaison, et au moins un dispositif de levage (30) de la plaque permettant de lever la plaque (25) à des hauteurs réglables.

15. Procédé de fabrication d'une pale d'hélice suivant la revendication 14, **caractérisé en ce que** le dispositif de levage (30) comprend un support (32) posé sur l'outillage (10), une pince (31) de la plaque (25), et un élévateur mobile sur le support et soutenant la pince (31).

## Patentansprüche

1. Verfahren zur Herstellung eines Propellerblattes, das folgende Verfahrensschritte umfasst:
- Bilden eines Blattholms (1) mit einem Blattkern (2);
- Bilden einer Blattvorform (6), die einen Faserstoff enthält, wobei der Stoff einen Trennbereich (7) aufweist, in dem er in zwei übereinanderliegende Häute (26, 27) aufgeteilt ist, wobei der Trennbereich eine Stelle enthält, die dazu bestimmt ist, den Blattkern aufzunehmen;
- Einsetzen der Blattvorform in eine Werkzeugvorrichtung (10), die einen Abdruck (11) dieser Vorform enthält;
- Öffnen des Trennbereichs (7) durch Auseinanderspreizen der Häute (26, 27);
- Einsetzen des Blattholms (1), indem der Blattkern (2) in den Trennbereich (7) eingeführt wird;
- Verschließen des Trennbereichs, indem die Häute einander wieder angenähert werden;
- Einspritzen von Harz in die Blattvorform;
- Polymerisierung des Harzes und Bearbeitung der Blattvorform;
**dadurch gekennzeichnet,**
**dass** es enthält:
- einen Arbeitsschritt der Erzeugung von Anzeigelinien (14), die Markierungen an vorbestimmten Positionen der Blattvorform (6) bilden, während der Bildung dieser Blattvorform;
- einen Arbeitsschritt der Formung der Blattvorform (6) in einer vorbestimmten Position in dem Abdruck nach dem Schritt des Einsetzens der Blattvorform, wobei die Anzeigelinien (14) in Übereinstimmung mit Zielpositionen gebracht werden, die bezogen auf die Werkzeugvorrichtung definiert wurden; und
- einen Arbeitsschritt des Einspannens der Blattvorform (6) in dem Abdruck, außerhalb des Trennbereichs (7), bevor der Trennbereich geöffnet wird und bis der Blattholm (1) eingesetzt ist.

2. Verfahren zur Herstellung eines Propellerblattes nach Anspruch 1,
**dadurch gekennzeichnet,**
**dass** die Arbeitsschritte des Formens der Blattvorform (6), des Einspannens der Blattvorform (6) und des Öffnens des Trennbereichs (7) der Blattvorform (6) ausgeführt werden, indem eine Vorrichtung zur Erzeugung der Zielpositionen verwendet wird, die eine bezogen auf die Werkzeugvorrichtung eingestellte Position hat, bzw. eine an der Werkzeugvorrichtung eingebaute Vorrichtung verwendet wird bzw. eine auf der Werkzeugvorrichtung angeordnete Vorrichtung verwendet wird.

3. Verfahren zur Herstellung eines Propellerblattes nach Anspruch 1 oder 2,
**dadurch gekennzeichnet,**
**dass** es ein Aufkleben einer Schaumstoffpackung (4) um den Blattkern herum beinhaltet, um den Blattholm zu bilden.

4. Verfahren zur Herstellung eines Propellerblattes nach einem der Ansprüche 1 bis 3,
**dadurch gekennzeichnet,**
**dass** der Blattholm ferner einen Blattfuß (3) aufweist.

5. Verfahren zur Herstellung eines Propellerblattes nach einem der Ansprüche 1 oder 3,
**dadurch gekennzeichnet,**
**dass** der Blattholm gebildet wird, indem ein Faserstoff hergestellt wird, indem ein zweites Harz in den Faserstoff eingespritzt wird, indem das zweite Harz polymerisiert wird und indem der Blattholm bearbeitet wird, wobei das zweite Harz sich von dem in die Blattvorform eingespritzten Harz unterscheidet.

6. Verfahren zur Herstellung eines Propellerblattes nach Anspruch 4,
**dadurch gekennzeichnet,**
**dass** der Werkzeugvorrichtungs-Abdruck einen Fortsatz (12) zur Aufnahme des Blattfußes aufweist.

7. Verfahren zur Herstellung eines Propellerblattes nach einem der Ansprüche 1 bis 6,
**dadurch gekennzeichnet,**
**dass** die Anzeigelinien (14) Markierungsfasern der Blattvorform sind, die ein besonderes Erscheinungsbild bieten.

8. Verfahren zur Herstellung eines Propellerblattes nach einem der Ansprüche 1 bis 7,
**dadurch gekennzeichnet,**
**dass** die Zielpositionen, die bezogen auf die Werkzeugvorrichtung definiert sind, durch einen Laser (15) markiert werden, der vor der Blattvorform beweglich ist und einen auf die Blattvorform gerichteten Strahl aufweist.

9. Verfahren zur Herstellung eines Propellerblattes nach Anspruch 8,
**dadurch gekennzeichnet,**
**dass** es einen Schritt des Markierens von Testpositionen (13) an der Werkzeugvorrichtung (10) durch den Laser (15) umfasst, um die Position des Lasers zu kalibrieren, bevor er die Zielpositionen markiert.

10. Verfahren zur Herstellung eines Propellerblattes nach einem der Ansprüche 7 bis 9,
**dadurch gekennzeichnet,**
**dass** das Einsetzen der Blattvorform nach dem Verbinden des Blattholms mit der Blattvorform und vor dem Einspritzen des Harzes wiederholt wird.

11. Verfahren zur Herstellung eines Propellerblattes nach einem der Ansprüche 1 bis 10,
**dadurch gekennzeichnet,**
**dass** der Arbeitsschritt des Einspannens ausgeführt wird, indem ein Schuh (18) sowie Mittel zur Klemmfeststellung der Blattvorform durch den Schuh verwendet werden, wobei der Schuh (18) in den Abdruck (11) eindringt und einen Innenrand aufweist, der in allgemein gleichbleibendem Abstand zu einer Kontur (40) des Trennbereichs (7) verläuft und sich außerhalb des genannten Bereichs um diese Kontur herum erstreckt.

12. Verfahren zur Herstellung eines Propellerblattes nach Anspruch 11,
**dadurch gekennzeichnet,**
**dass** der Schuh (18) einen Außenrand aufweist, von dem ein Teilabschnitt einer Kontur des Abdrucks (11) genau folgt, und der Innenrand Teilabschnitte eines vertikalen Randes (9) und eines inneren Randes (8) der Vorform freiliegen lässt, wobei der Abdruck (11) mit einem Fortsatz (12) vor dem inneren Rand (8) versehen ist, um einen zu dem Blattholm (1) gehörigen Blattfuß (3) aufzunehmen.

13. Verfahren zur Herstellung eines Propellerblattes nach einem der Ansprüche 11 oder 12,
**dadurch gekennzeichnet,**
**dass** die Mittel zur Klemmfeststellung Klemmbacken (19) umfassen, die Halter (22) aufweisen, die an der Werkzeugvorrichtung (10) befestigt sind, sowie bewegbare Andruckmittel des Schuhs (18) auf das Hauptteil der Werkzeugvorrichtung umfassen.

14. Verfahren zur Herstellung eines Propellerblattes nach einem der Ansprüche 1 bis 13,
**dadurch gekennzeichnet,**
**dass** der Verfahrensschritt des Öffnens des Trennbereichs (7) unter Verwendung eines Spreizers ausgeführt wird, der eine Platte (25) umfasst, die in den Trennbereich eingeführt wird, ohne sich bis zu einer innerhalb der Vorform befindlichen Kontur (40) des Trennbereichs zu erstrecken, sowie mindestens eine Hebeeinrichtung (30) der Platte umfasst, mittels derer die Platte (25) auf einstellbare Höhen angehoben werden kann.

15. Verfahren zur Herstellung eines Propellerblattes nach Anspruch 14,
**dadurch gekennzeichnet,**
**dass** die Hebeeinrichtung (30) einen Fuß (32), der auf die Werkzeugvorrichtung (10) gestellt wird, eine Zange (31) für die Platte (25) und ein Hebewerk, das auf dem Fuß bewegbar ist und die Zange (31) hält, aufweist.

## Claims

1. Method for manufacturing a propeller blade, comprising the following steps:
- formation of a longeron (1) comprising a blade core (2);
- formation of a blade preform (6) comprising a fibre weave, the weave having a separating area (7) wherein it is divided into two superimposed skins (26, 27), the separating area comprising a location intended to receive the blade core;
- positioning the blade preform into an equipment (10) comprising an indentation (11) of said preform;
- opening of the separating area (7) by separating the skins (26, 27);
- installation of the longeron (1) by inserting the blade core into the separating area (7),
- closing of the separating area by bringing the skins closer together;
- injection of resin into the blade preform;
- polymerisation of the resin and machining of the blade preform;
**characterized in that** it comprises:
- a step of creating trackers (14) which are reference marks at determined positions on the blade preform (6), during the formation of the blade preform;
- a step of forming the blade preform (6) at a determined position in the indentation after the positioning of the blade preform, by coinciding the trackers (14) with target positions set in the equipment (10);
- and a step of tightening the blade preform (6) in the indentation outside the separating area (7) before the opening of the separating area and until the longeron (1) is installed.

2. Method for manufacturing a propeller blade according to claim 1, **characterised in that** the step of formation of the blade preform (6), tightening the blade preform (6) and opening of the separating area (7) of the blade preform (6) are respectively accomplished by a device for creating the target positions, the device having a position set with respect to the equipment, a device implanted on the equipment and a device standing on the equipment.

3. Method for manufacturing a propeller blade according to claim 1 or 2, **characterised in that** it comprises a gluing of a foam lining (4) around the blade core in order to form the longeron.

4. Method for manufacturing a propeller blade according to any of claims 1 or 3, **characterised in that** the longeron further comprises a blade shank (3).

5. Method for manufacturing a propeller blade according to any of claims 1 or 3, **characterised in that** the longeron is formed by creating a fibre weave, by injecting a second resin into the weave, by polymerising the second resin and by machine tooling the longeron, the second resin being different from the resin injected in the blade preform.

6. Method for manufacturing a propeller blade according to claim 4, **characterised in that** the equipment indentation comprises an appendage (12) for receiving the blade shank.

7. Method for manufacturing a propeller blade according to any of claims 1 to 6, **characterised in that** the trackers (14) are tracking fibres of the blade preform, which have a particular appearance.

8. Method for manufacturing a propeller blade according to any of claims 1 to 7, **characterised in that** the target positions set in the equipment are crated by a laser (15) mobile in front of the blade preform and having a beam (16) directed onto the blade preform.

9. Method for manufacturing a propeller blade according to claim 8, **characterised by** a step of locating patterns (13) established on the equipment (10) by the laser (15), so as to calibrate the position of the laser before it creates the target positions.

10. Method for manufacturing a propeller blade according to any of claims 7 to 9, **characterised in that** the positioning of the blade preform is repeated after having joined the longeron to the blade preform and before the injection of the resin.

11. Method for manufacturing a propeller blade according to any of claims 1 to 10, **characterised in that** the tightening of the blade preform is made by using a shoe (18) and means of clamping the blade preform by the shoe, the shoe penetrating into the indentation (11), comprising an inner edge extending at a generally constant distance from an outline (40) of the separating area (7) and extending around said outline outside of said area.

12. Method for manufacturing a propeller blade according to claim 11, **characterised in that** the shoe (18) comprises an outer edge, a portion of which follows an outline of the indentation (11) in an adjusted manner, and an inner edge does not overlap portions of a vertical edge (9) and of an inner edge (8) of the blade preform, the indentation (11) comprising an appendix (12) in front of the inner edge (8) for accomodating a blade root (3) which is a part of the longeron (1).

13. Method for manufacturing a propeller blade according to any of claims 11 and 12, **characterised in that** the tightening means comprise jaws (19) which comprise supports (22) secured to the equipment (10) and means for pressing the shoe (18), said means being mobile towards a main part of the equipment.

14. Method for manufacturing a propeller blade according to any of claims 1 to 13, **characterised in that** the opening of the separating area (7) is made by using a separator, the separator comprising a plate (25) introduced into the separating area without extending to an internal outline (40) of the separating area in the preform, and at least one device for lifting (30) the plate, enabling to raise the plate (25) to adjustable heights.

15. Method for manufacturing a propeller blade according to claim 14, **characterised in that** the device for lifting (30) comprises a support (32) installed on the main part (10) of the equipment, a clip (31) of the plate (25), and a mobile lifter on the support and supporting the clip (31).
